# EUROPEAN PATENT SPECIFICATION

(11) **EP 1 326 384 B1**
(45) Date of publication and mention of the grant of the patent: **03.05.2006**
(21) Application number: 02258927.9
(22) Date of filing: 20.12.2002
(51) Int. Cl.: H04L 12/56

(54) **Technique for computing pathways in a multi-stage switch fabric through exploitation of symmetrical links**
Verfahren zur Berechnung der Wege in einer mehrstufigen Vermittlungsstelle mittels Ausnutzung der symmetrischen Verbindungen
Technique pour le calcul de chemins dans un commutateur de réseau multi-étages par l'exploitation de liaisons symétrique

(30) Priority: 20.12.2001 CA 2365963; 11.04.2002 US 119765
(43) Date of publication of application: 09.07.2003
(73) Proprietor: Nortel Networks Limited, St.Laurent, Quebec H4S 2A9 (CA)
(72) Inventor: Steele, David C, Kanata, Ontario K2M 2G6 (CA); Towers, Jeff J, Nepean, Ontario, K2J 4C7 (CA); King, Andrew, Welwyn Garden City Herts AL7 2HZ (GB)
(74) Representative: Ertl, Nicholas Justin

(56) References cited:
- WO-A-00/77986
- US-A- 5 247 513
- US-A- 5 754 120
- US-A- 5 781 546

## Description

### FIELD OF THE INVENTION

The invention relates to devices and methods for switching data traffic, and more particularly to devices and methods to establish internal pathways in a switch fabric needed to realize a plurality of links between external ports.

### BACKGROUND OF THE INVENTION

A switch fabric provides pathways for conveying data traffic between external input and output ports. A switch fabric may include an input and an output stage, each stage including a plurality of switching elements. The input and output stages respectively provide a plurality of external input and output ports connected to external connections. The switch fabric also includes one or more intermediate stages including a plurality of switching elements. Internal pathways are selectively established in the switch fabric between the external input ports and the external output ports to provide the switching capability. When the number of external input and output ports is large, it is usually not cost-effective, or technically feasible, to directly connect each external input port to all the external output ports.

One problem that may arise in a switch fabric of the type described above is that the switch fabric may become blocked. The switch fabric is said to be blocked when no pathway between an external input port and an external output port can be established. Therefore, data traffic between these external ports cannot be passed.

Against this background, there exists a need to provide novel techniques to allocate pathways in the switch fabric to reduce the possibility of blocking the switch fabric.

US 5247513 discloses a packet-orientated multiple path self-routing switching network for switching asynchronous time-division multiplexed packets. The network includes switch units of at least one upstream stage capable of defining an available state in which a downstream switch unit is available for routing packet traffic and for transmitting availability status information to upstream switch units when the downstream switch unit is in that available state. Each upstream switch unit also includes means for receiving availability status information for those outputs leading to a switch unit in the available state, and for prohibiting access to any output for which such availability status information is not received.

### SUMMARY OF THE INVENTION

According to the invention, there is provided a switch fabric controller means for use with a switch fabric, the switch fabric being for switching data traffic according to a plurality of links and comprising: an input stage means including a plurality of switching elements having external input ports; an output stage means including a plurality of switching elements having external output ports; and at least one intermediate stage means including a plurality of switching element means, said switch fabric controller means being characterized in that: said switch fabric controller means includes a link database means including information about the plurality of links; said switch fabric controller means is operative to search said link database means to identify links that are symmetrical at a first level, wherein two links are symmetrical at the first level if: the number of external input ports of a first link is equal to the number of external output ports of a second link, and the number of external output ports of the first link is equal to the number of external input ports of the second link; and said switch fabric controller means is operative for establishing internal pathways between said input stage means and said output stage means through said at least one intermediate stage means, wherein at least two links symmetrical at the first level identified by the searching are realized using a common switching element means of said at least one intermediate stage means.

The invention also provides a switch fabric comprising the switch fabric controller described above.

According to another aspect of the invention, there is provided method for switching data traffic according to a plurality of links through a switch fabric, the switch fabric having: an input stage including a plurality of switching elements having external input ports; an output stage including a plurality of switching elements having external output ports; at least one intermediate stage including a plurality of switching elements; and a link database including information about the plurality of links according to which data traffic is to be switched by the switch fabric, said method being characterized in that it comprises: searching the link database to identify links that are symmetrical at a first level, wherein two links are symmetrical at the first level if: the number of external input ports of a first link is equal to the number of external output ports of a second link, and the number of external output ports of the first link is equal to the number of external input ports of the second link; and establishing internal pathways between the input stage and the output stage through the at least one intermediate stage, wherein at least two links symmetrical at the first level identified by the searching are realized over a common switching element of the at least one intermediate stage.

The invention is carried out also by the computer program of claim 20.

The invention thus provides a more efficient utilization of the switch fabric. Consequently, a smaller, less complicated, and less expensive switch fabric can be employed.

Different levels of symmetry can exist between links. Two links are symmetrical at the first level if:
I. the number of external input ports of the first link is equal to the number of external output ports of the second link; and
II. the number of external output ports of the first link is equal to the number of external input ports of the second link.

This definition applies equally well to unicast links as to multicast links. An internal pathway realizing a unicast link provides connectivity between a single external input port and a single external output port. An internal pathway realizing a multicast link provides connectivity between any other number of ports of the input and output stages.

For example, the link from the external input port #1 to the external output ports #2 and #3 is symmetrical at the first level with the link from external input ports #2 and #3 to the external output port #1. Only the external input ports and the external output ports involved in the respective links, without regard to the internal switching elements involved in the links, determine symmetry at the first level. In other words, two links can be symmetrical at the first level even when they use different ones or different combinations of the intermediate stage switching elements.

Two links are symmetrical at the second level if in addition to being symmetrical at the first level they share a common switching element at the input stage. Also, two links are symmetrical at the third level if in addition to being symmetrical at the second level, they share a common switching element at the output stage.

For clarity, the expression symmetrical link or equivalent used in this specification, without the qualifier "first level" , "second level" or "third level" implies symmetry at least at the first level without excluding symmetry at the second level or at the third level.

Bi-directional links between network elements are a specific example of the notion of symmetrical links. Consider, for example, a first network element (network element 1) sending data over a first link to three other network elements (network elements 2, 3 and 4). The network elements 2, 3 and 4 send data to network element 1 over a second link. Therefore, the first and the second would be symmetrical.

In one example of implementation, the switch fabric controller considers links to be realized before passing any traffic. Typically, this situation occurs when the switch fabric is switched from an inactive state to an active state. Symmetrical links are searched for in the link database and instructions are sent to the switching elements such that symmetrical link pairs are realized by using a common switching element(s) of the intermediate stage(s) between the input and the output stages. The number of symmetrical link pairs that can be bundled into one common intermediate stage switching element is practically limited by the bandwidth capacity of the switching elements and the number of available connections between the switching elements.

In another example of implementation, the switch fabric controller computes a revised internal pathway map while the switch fabric is in operation and re-arranges the connections between switching elements to implement the revised internal pathway map. This situation occurs when a new link is to be realized while the switch fabric is in operation. The computation of the revised internal pathway map involves searching at least one existing link for which an internal pathway has already been set) that is symmetrical to the new link. If one or more such prior symmetrical links are found, the data traffic associated with the new link is passed through an intermediate stage switching element that is used by one of the prior symmetrical link(s). If no symmetrical links are found, then a new internal pathway is created using an available intermediate stage switching element.

### BRIEF DESCRIPTION OF THE DRAWINGS

A detailed description of examples of implementation of the present invention is provided herein below with reference to the following drawings, in which:
Figure 1 is a block diagram of a Clos switch fabric and
Figure 2 is a flow chart of an internal pathway map creation algorithm.

In the drawings, embodiments of the invention are illustrated by way of example. It is to be expressly understood that the description and drawings are only for purposes of illustration and as an aid to understanding, and are not intended to be a definition of the limits of the invention.

### DETAILED DESCRIPTION

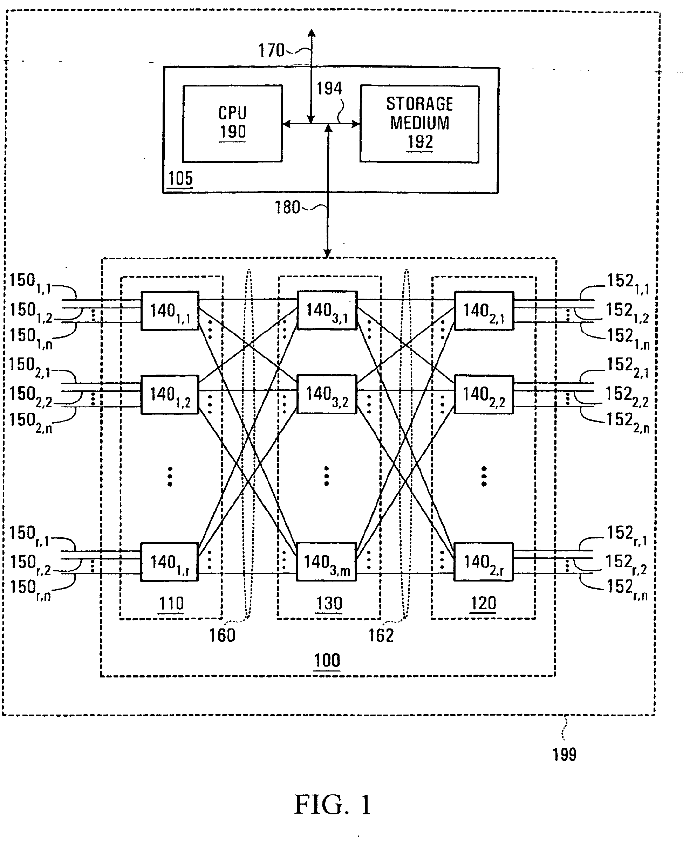

Figure 1 shows a multi-stage switch fabric 100. In particular, the switch fabric 199 comprises a three-stage Clos network 100 and a switch fabric controller 105. The Clos network 100 comprises an input stage 110, an output stage 120 and an intermediate stage 130. Data traffic enters and exits the switch fabric 199 respectively at the input and output stages 110 and 120. The intermediate stage 130 is used to convey data traffic internally between the input and the output stages 110 and 120. It should be understood that a switch fabric 199 comprising a Clos network 100 is illustrated on Figure 1 to give a concrete example of implementation. However, the present invention is applicable to other types of multi-stage switch fabrics, in particular to switch fabrics comprising more than one intermediate stage.

Each of the input, output and intermediate stages 110, 120 and 130 comprises a plurality of switching elements 140_{a,b} referred to generally by the reference numeral 140. The input stage 110 comprises the switching elements 140_{1,b,} the output stage 120 comprises the switching elements 140_{2,b} and the intermediate stage 130 comprises the switching elements 140_{3,b}. The input and output stages 110 and 120 each comprise r switching elements 140_{a,b} while the intermediate stage 130 comprises m switching elements 140_{3,b}. In the detailed example shown in the drawings, all the stages 110, 120 and 130 have an identical number of switching elements 140. This is not an essential requirement and the number of switching elements 140 can vary from one stage (110, 120 or 130) to another.

Each switching element 140_{a,b} comprises a plurality of input and output ports, each port being either an internal or an external port. External input and output ports are respectively used to convey data traffic from and to a plurality of external input and output connections 150_{b,c} and 152_{b,c} and are only present at the input and output stages 110 and 120. The external input and output connections are globally referred to respectively by the reference numerals 150 and 152. Internal input and output ports are used to convey data traffic from and to connection matrices 160 and 162. The connection matrices 160 and 162 respectively connect the intermediate stage 130 to the input stage 110 and the output stage 120 by conveying data traffic between internal input and output ports of switching elements of the input output and intermediate stages 110, 120 and 130 through permanent or temporary internal connections.

In a non-limiting example of implementation, data traffic flows through the switch in only one direction, namely from the left to the right of the switch fabric 199. In other words, data traffic always passes through the Clos network 100 in the following sequence; data enters through the input stage 110, passes through the intermediate stage 130 and leaves the switch fabric through the output stage 120.

The external input connections 150 and the external output connections 152 connect the input stage 110 and the output stage 120 to external network elements that send data traffic to the switch fabric 199 or receive data traffic from the switch fabric 199. Each switching element 140_{a,b} of the input (a=1) and output (a=2) stages 110 and 120 comprises n external input or output ports respectively, each one connected to one external input or output connection 150_{b,c} or 152_{b,c}, c varying from 1 to n. Each switching element 140_{a,b} of the input (a=1) and output (a=2) stage further comprises m internal input or output ports, each one connected to one of the internal connection matrices 160 and 162. N can be different or equal to m.

The switching elements 140 direct data traffic between the internal and external input and output ports. In a specific example of implementation, each switching element is an Application Specific Integrated Circuit (ASIC).

The switching elements 140 and the connection matrices 160 and 162 are known in the art and their structure and operation will not be described in more detail.

The basic function of the switch fabric controller 105 is to compute an internal pathway map that represents all the internal pathways in the switch fabric 199. Another function of the switch fabric controller 105 is to send control signals to the switching elements 140 and connection matrices 160 and 162, the control signals comprising instructions for establishing the internal pathways according to the pathway map.

In a non-limiting example of implementation, the switch fabric controller 105 includes a Central Processing Unit (CPU) 190 connected to a storage medium 192 over a data bus 194. Although the storage medium 192 is shown as a single block, it may include a plurality of separate components, such as a fixed disk and a Random Access Memory (RAM),among others. The data bus 194 is connected to a signaling link 170 that communicates with the network elements connected to the external connections 150 and 152. The data bus 194 is connected to the Clos network 100 through a control path 180. The control path 180 conveys control signals between the data bus 194 and the switching elements 140 and connection matrices 160 and 162.

For the purpose of this description, a link, an internal connection and an internal pathway are defined as follows. A link is defined by the external input ports of the switching elements 140 of the input stage 110 and the external output ports of the switching elements 140 of the output stage 120 through which data traffic is exchanged. For example, a link could be realized between the external input port connected to the external input connection 150_{1,1} and the external output ports connected to the external output connections 152_{2,3} and 152_{4,2}. Stated otherwise, a link is defined solely by the point(s) of entry of data in the switch fabric 199 and the point(s) of release of data from the switch fabric 199.

An internal connection is a permanent or temporary data channel between two of the switching elements 140.

An internal pathway realizes a link by setting internal connections between switching elements 140 of the input, output and intermediates stages 110, 120 and 130. Many different internal pathways may realize a given link. For example, to realize the particular link given in the example above, all the data traffic may go through the switching element 140_{3,1} of the intermediate stage 130. Alternatively, the data traffic between the external input and output ports connected to the external input and output connections 150_{1,1} and 152_{2,3} may go through the switching element 140_{3,1} and the data traffic between the external input and output ports connected to the external input and output connections 150_{1,1} and 152_{4,2} may go through the switching element 140_{3,4}.

The switch fabric controller 105 is adapted to receive information signals through the signaling link 170 from the network elements with which the switch fabric 199 exchanges data traffic, the information signals providing information concerning links to be realized by the switch fabric 199. A link database, which resides in the storage medium 192, stores the information concerning the links to be realized.

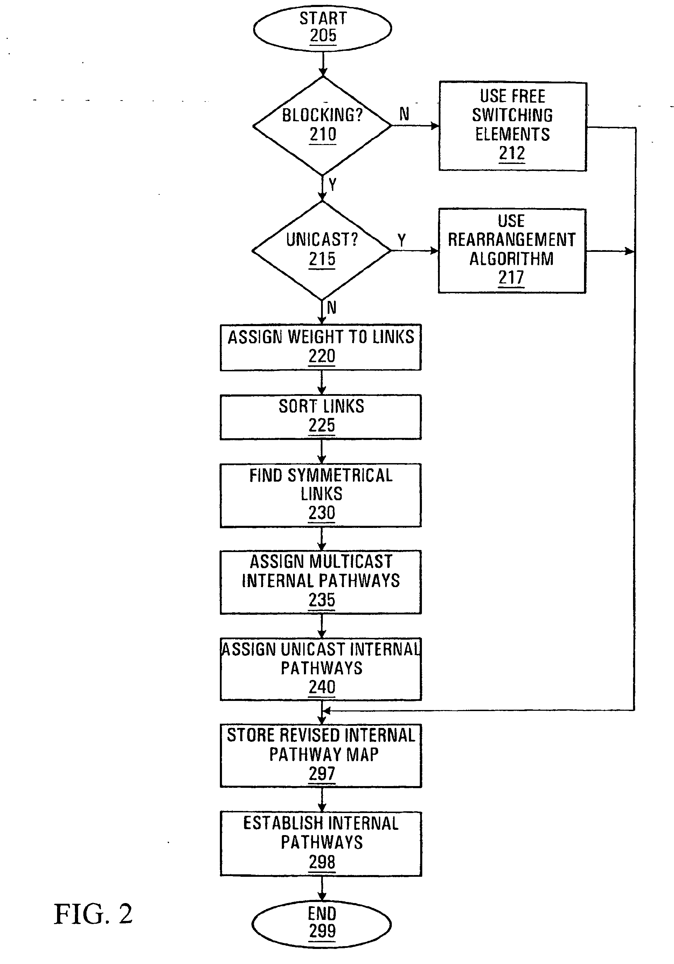

Figure 2 is a flowchart of an example of implementation of a process for computing an internal pathway map implemented by the switch fabric controller 105. This process is implemented by software residing in the storage medium 192 and executed by the CPU 190. In a non-limiting example of implementation, the software is a program element comprising a searching module for searching the link database to identify pairs of symmetrical links(symmetrical links at the first level, the second level and the third level, as the case may be) and a processing module for computing internal pathways between the input stage and the output stage.

The process illustrated on Figure 2 may be run every time when a new internal pathway needs to be added to an already existing internal pathway map. This happens when the switch fabric 199 is in operation and a new link needs to be realized. It will be plain to the reader skilled in the art that the process can also be used, with some minor modifications, to compute a new internal pathway map, which may be the case if the switch fabric 199 is reset.

The process begins at step 205. At step 210, the switch fabric controller 105 examines if it is possible to allocate an internal pathway to realize a new link by using free internal connections. If there is no blocking, an internal pathway allocation is made at step 212, thereby producing a modified internal pathway map, which is stored in the storage medium 192 at step 297. Then, at step 298, the CPU 190 sends control signals to the switching elements 140 and connection matrices 160 and 162 such that the switch fabric implements the internal pathway map including the internal pathway for the new link.

If no internal pathway can be found for the new link, there is a blocking problem. The method continues to step 215 in which the switch fabric controller 105 examines if the link to realize is a unicast link or not. If it is a unicast link, a rearrangement algorithm is used at step 217 to resolve the blocking. An example of a rearrangement algorithm is described in Ohta et al., "A Rearrangement Algorithm for Three-Stage Switching", Electronics and communications in Japan, Part 1, Vol. 70, No. 9, 1987.

The step 217 yields a revised internal pathway map, which includes an internal pathway for the new link. The revised internal pathway map is stored at step 297 in the storage medium 192. Then, at step 298, the CPU 190 sends control signals to the switching elements 140 and connection matrices 160 and 162 for implementing the revised pathway map.

If the link to realize is multicast, the method continues to step 220, wherein all the links in the link database are examined and a weight is assigned to each link. Methods of assigning weights to links are well known in the art. In a non-limiting example of implementation weights are assigned according to the complexity of the link, the complexity being determined by the number of external input and output ports involved in realizing the link. The higher the complexity, the higher the weight.

At step 225, the links are sorted by the program element according to the weight assigned to them. In one particular example of implementation, the links are sorted in decreasing order of weight (complexity).

At step 230, the searching module of the program element searches the sorted links to identify pairs of symmetrical links, in particular pairs of multicast links that are symmetrical at the third level..

At step 235, internal pathways are assigned to the pairs of third level symmetrical links by the processing module of the program element, such that the internal pathways for both links in the pair are routed through a common switching element 140 of the intermediate stage 130. In the case of multiple intermediate stages, the internal pathways for both links in the pair are routed through the same switching element in each intermediate stage.

When all the multicast links have been allocated, the unicast links are allocated using the remaining free connections at step 240. If there is blocking in the allocation of unicast links, a rearrangement algorithm, which may be the rearrangement algorithm referred to above, can be used.

The above computations produce an internal pathway map, which is stored in the storage medium 192 at step 297. Subsequently, at step 298, control signals are sent over the control path 180 to configure the switching elements 140 and the connection matrices 160 and 162 in order to set internal connections according to the internal pathway map, thereby realizing the links.

The process terminates at step 299. At this point, signaling information can be sent through the signaling link 170 to the network elements to notify those network elements that the switch fabric 199 is ready to pass data traffic.

The reader skilled in the art will appreciate that the method described in Figure 2 has partitioned the switch fabric (100) into two parts: one part that has non-rearrangeable multicast links as realized at step 235, and the second part having rearrangeable unicast links. As well, given a three-stage rearrangeably non-blocking Clos switch fabric, the switch fabric 100 is non-blocking because the rearrangeable part retains the non-blocking characteristics.

As a variant to the method described in Figure 2, the invention provides a method allowing realizing a class of multicast internal pathways as rearrangeable links. This class includes bi-directional links whereby there are protection constraints among the external input ports (150) and external output ports (152).

The allocation of internal pathways that are constrained to pass through a common switching element 140 is particularly advantageous in the context of protection switching, wherein protection pathways have to be set within a small delay subsequent to a failure of a working link, such that the data traffic on a working link is redirected over a protection link. In this case, the switch controller 105 is adapted to receive signals from network elements comprising instructions regarding the protection switching to effect. In general, this method allows the protection switching activity to be achieved quickly without having to perform link rearrangements throughout the switch fabric 100.

The method is described below. The links to be established are separated in first and second groups of links. The separation in groups is effected in the following fashion. Each link in the link database is considered separately. The first link is placed arbitrarily in one of the two groups, say group #1. The switch fabric controller 105 then searches the remaining links in the links database for a link that is symmetrical to the first link. In this example symmetry at the third level is considered. If such third level symmetrical link is found, then the third level symmetrical link is automatically placed in the other group, say group #2. The process continues until all the links have been assigned to group #1 or to group #2. As a result, two groups of links are produced, where links that are symmetrical at the third level to one another are placed in different groups.

Next, half of the interconnectivity 160 between each input 110 and intermediate stage 130 switching element is allocated for group #1 links. The same is done for the interconnectivity between the intermediate stage 130 and the output stage 120 switching elements. The remaining interconnectivity is allocated for group #2 links. Essentially, this leaves half of the possible internal pathways allocated for the group #1 links and the other half for the group #2 links.

Internal pathways are then computed by the switch fabric controller 105 for the group #1 links using the intermediate stage interconnectivity allocated for group #1. The process 240 is used for allocating internal pathways for group #1 links. These interconnects are then copied from 160 to 162 and from 162 to 160 symmetrically into the connectivity reserved for group #2. This realizes the group #2 links. A non-limiting example will illustrate this method.

Assume 150_{1,1} and 150_{1,2} are protecting and working inputs respectively, and 152_{1,1} and 152_{1,2} are the corresponding outputs wherein 150_{1,1} protects 150_{1,2} and 152_{1,1} protects 152_{1,2}. Further assume 150_{r,1} and 150_{r,2} are low and high priority inputs, and 152_{r,1} and 152_{r,2} are the corresponding outputs. Assume that there are two interconnects between each of the switching elements 140 in this simplified example. Assign the first interconnect to group #1 and the second to group #2.

Now assume the switch fabric controller 105 requests the following connections:
- low priority bi-directional links 150_{r,1} to 152_{1,1} and
- high priority bi-directional links 150_{1,2} to 152_{r,2}.

Assign 150_{r,1} to 152_{1,1} and 150_{r,2} to 152_{1,2} to group #1 and the other two links to group #2.

Assume the link 150_{r,1} to 152_{1,1} is realized using the pathway from 140_{1,r} via the first interconnect to 140_{3,2}, and from 140_{3,2} via the first interconnect to 140_{2,1}. Then, the link 150_{1,1} to 152_{r,1} is automatically realized by using the interconnects allocated to group #2. That is, the pathway from 140_{1,1} via the second interconnect to 140_{3,2} is used, and the pathway from 140_{3,2} via the second interconnect to 140_{2,r} is used. Note the group #2 pathway was obtained from the group #1 pathway by using symmetrical links.

Assume the high priority links are realized in the same manner through 140_{3,1}. It will be appreciated that once one link in a pair of symmetrical links is assigned to a first internal pathway, the possibility of finding a second internal pathway for the other link in the symmetrical pair that passes through the same switching element 140 of the intermediate stage 130 is large. Using this method, a three-stage rearrangeably non-blocking Clos switch fabric can avoid blocking situations.

With the links now established in this manner on the switch fabric, the reader skilled in the art will appreciate that various forms of protection switching can be executed quickly without having to perform any link rearrangement throughout the switch fabric.

As a non-limiting example, if the external input port 150_{1,2} fails due to an upstream failure then the working link from 150_{1,2} to 152_{r,2} is protected by the switch fabric controller 105 making a change at switching element 140_{1,1} to alter the internal connections such that the working link selects the traffic from the protection input port 150_{1,1}. Similar protection switch behaviour would occur if the external output port 152_{1,1} were to fail, whereby only one switching element is affected. If there was either an upstream or a downstream failure whereby the network element was required to passthrough protected traffic from 150_{1,1} to 152_{1,1} this is achieved by the switch fabric controller 105 making a change at switching element 140_{3,2} to alter the internal connections such that the traffic from 150_{1,1} is redirected toward external output port 152_{1,1}.

At the same time the protection switching procedure is implemented, the lower priority traffic is negated. In the case of the protection switch required to passthrough protection traffic, the low priority traffic at external output port 152_{r,1} and the low priority traffic at external input port 150_{1,1} is negated.

In another non-limiting example of the protection switching behaviour this method provides, assume that two links are realized through the switch fabric 100. The first link is a working link, in other words it is the link that carries data traffic during normal operation of the switch fabric 100. This link enters the switch fabric 100 at the external input connection 150_{1,1} and leaves at the external output connection 152_{r,n}, passing through the switching element 140_{3,2}. The working link is protected by a protection link that enters at the external input connection 150_{r,n}, leaves at the external output connection 152_{1,1} and passes through the switching element 140_{3,2}. To take advantage of the bandwidth available on the protection link while the working path is operational, low priority data traffic is passed over at least a portion of the protection link. This low priority data traffic enters at the external input connection 150_{r,2}, leaves at the external output connection 152_{1,1} and passes through the switching element 140_{3,2}. If the working link fails, say because of a failure downstream the external output connection 152_{r,n}, a protection switching procedure is implemented by the switch fabric controller 105 such that the data traffic is now re-directed toward the external output connection 152_{1,1}. This is effected simply by making a change at the switching element 140_{3,2} to alter the internal connections between the switching element 140_{3,2} and the output stage 120. This operation can be done very rapidly since only a single switching event at the switching element 140_{3,2} is necessary and no link rearrangement is required. As a result data traffic entering at the external input connection 150_{1,1} will now leave at the external output connection 152_{1,1} and still pass internally through the switching element 140_{3,2}.

At the same time the protection switching procedure is implemented, the lower priority data traffic is dropped and the link entering at the external input connection 150_{r,2}, leaving at the external output connection 152_{1,1} and passing through the switching element 140_{3,2} is negated.

Tn the earlier aspect of the invention, symmetrical links are constrained to pass through a common switching element 140 of the intermediate stage 130. Accordingly, there is an advantage to use one of the links in a symmetrical pair of links to provide protection switching for the other link that constitutes the working link. This approach makes the designation of protection links and pathways simple once the symmetrical links in the links database have been identified. Evidently, the invention is not limited to this feature and protection pathways can be assigned or created without any regard to symmetry between links.

## Claims

1. A switch fabric controller means (105) adapted to be used with a switch fabric (199), the switch fabric being for switching data traffic according to a plurality of links and comprising:
an input stage means (110) including a plurality of switching elements having external input ports;
an output stage means (120) including a plurality of switching elements having external output ports; and
at least one intermediate stage means (130) including a plurality of switching element means,
said switch fabric controller means includes a link database means (190, 192) including information about the plurality of links;
**characterized in that**
said switch fabric controller means is operative to search said link database means to identify links that are symmetrical at a first level, wherein two links are symmetrical at the first level if: the number of external input ports of a first link is equal to the number of external output ports of a second link, and the number of external output ports of the first link is equal to the number of external input ports of the second link; and
said switch fabric controller means is operative for establishing internal pathways between said input stage means and said output stage means through said at least one intermediate stage means, wherein at least two links symmetrical at the first level identified by the searching are realized using a common switching element means of said at least one intermediate stage means.

2. A switch fabric (199) for switching data traffic according to a plurality of links, comprising:
an input stage means (110) including a plurality of switching elements having external input ports;
an output stage means (120) including a plurality of switching elements having external output ports;
at least one intermediate stage means (130) including a plurality of switching element means; and
a switch fabric controller means (105) as defined in claim 1.

3. A switch fabric as defined in claim 2, wherein said switch fabric (199) is for circuit switching data traffic.

4. A switch fabric as defined in claim 3, wherein said switch fabric controller means (105) is further operative to search said link database means to identify links that are symmetrical at a second level, wherein two links are symmetrical at the second level if in addition to being symmetrical at the first level they share a common switching element at the input stage, and establish internal pathways between the input stage means and the output stage means through the at least one intermediate stage means, wherein at least two links symmetrical at the second level identified by the searching are realized over a common switching element means of the at least one intermediate stage means.

5. A switch fabric as defined in claim 4, wherein said switch fabric controller means (105) is further operative to search said link database means to identify links that are symmetrical at a third level, wherein two links are symmetrical at the third level if in addition to being symmetrical at the second level they share a common switching element at the output stage, and establish internal pathways between the input stage means and the output stage means through the at least one intermediate stage means, wherein at least two links symmetrical at the third level identified by the searching are realized over a common switching element means of the at least one intermediate stage means.

6. A switch fabric as defined in claim 5, wherein said switch fabric controller means (105) is operative to search said link database means to identify all pairs of links symmetrical at the third level present in said link database means.

7. A switch fabric as defined in claim 6, wherein each pair of links symmetrical at the third level is realized over a respective common switching element means of said at least one intermediate stage means (130).

8. A switch fabric as defined in claim 5, wherein said link database means (190, 192) includes links symmetrical at the third level that are unicast.

9. A switch fabric as defined in claim 5, wherein said link database means (190, 192) includes links symmetrical at the third level that are multicast.

10. A switch fabric as defined in claim 5, including a single intermediate stage means (130).

11. A switch fabric as defined in claim 10, wherein the links in said link database means (190, 192) are **characterized by** a complexity, said switch fabric controller means (105) being operative to assign weights to links in said link database means according to the complexity of the links, reorder said link database means according to the assigned weights in decreasing order of complexity and process the reordered link database means starting from the link having the highest weight to assign switching elements means of said at least one intermediate stage means (130) when computing internal pathways for the links in the reordered link database means.

12. A switch fabric as defined in claim 5, wherein said switch fabric controller means (105) is operative to separate the plurality of links in at least two groups, wherein the at least two links symmetrical at the third level identified by the searching are placed in different groups.

13. A switch fabric as defined in claim 12, wherein said switch fabric (199) is operative for establishing internal pathways for links in one of said groups and subsequently establishing internal pathways for links in the other of said groups.

14. A method for switching data traffic according to a plurality of links through a switch fabric (199), the switch fabric having:
an input stage (110) including a plurality of switching elements having external input ports;
an output stage (120) including a plurality of switching elements having external output ports;
at least one intermediate stage (130) including a plurality of switching elements; and
a link database (190, 192) including information about the plurality of links according to which data traffic is to be switched by the switch fabric,
said method being **characterized in that** it comprises:
searching the link database to identify links that are symmetrical at a first level, wherein two links are symmetrical at the first level if: the number of external input ports of a first link is equal to the number of external output ports of a second link, and the number of external output ports of the first link is equal to the number of external input ports of the second link; and
establishing internal pathways between the input stage and the output stage through the at least one intermediate stage (298), wherein at least two links symmetrical at the first level identified by the searching are realized over a common switching element of the at least one intermediate stage.

15. A method as defined in claim 14, wherein the data traffic is circuit switched data traffic.

16. A method as defined in claim 15, including searching the link database (190, 192) to identify all pairs of links symmetrical at the first level present in the link database.

17. A method as defined in claim 15, wherein the method includes searching the link database (190, 192) to identify pairs of symmetrical links at a second level, wherein two links are symmetrical at the second level if in addition to being symmetrical at the first level they share a common switching element at the input stage, and establishing internal pathways between the input stage (110) and the output stage (120) through the at least one intermediate stage (130), wherein at least two links symmetrical at the second level identified by the searching are realized over a common switching element of the at least one intermediate stage.

18. A method as defined in claim 17, wherein the method includes searching the link database (190, 192) to identify pairs of symmetrical links at a third level, wherein two links are symmetrical at the third level if in addition to being symmetrical at the second level they share a common switching element at the output stage, and establishing internal pathways between the input stage (110) and the output stage (120) through the at least one intermediate stage (130), wherein at least two links symmetrical at the third level identified by the searching are realized over a common switching element of the at least one intermediate stage.

19. A method as defined in claim 15, wherein the links in the link database (190, 192) are **characterized by** a complexity, said method including assigning weights to links in the link database according to the complexity of the links, reordering the link database according to the assigned weights in decreasing order of complexity and processing the reordered link database starting from the link having the highest weight to assign switching elements of the at least one intermediate stage (130) when computing internal pathways for the links in the reordered link database.

20. A computer program comprising computer program code means adapted to perform all the steps of claim 14 when said program is run on a computer.

21. A computer program as defined in claim 20 embodied on a computer readable medium.

22. A switch fabric as defined in claim 2, wherein:
said switch fabric controller means (105) is operative for establishing an internal pathway for a working link through said input stage means (110), said output stage means (120) and through said at least one intermediate stage means (130); and
said switch fabric controller means (105) is operative for establishing an internal pathway for a protection link protecting said working link through said input stage means, said output stage means and said at least one intermediate stage means, wherein said working link and said protection link are established through at least one common switching element of said input stage means, said output stage means and said at least one intermediate stage means; and
in case of a failure of the working link said switch fabric controller means (105) is operative to perform a switching event at said at least one common switching element to direct data traffic on the working link to the protection link.

23. A switch fabric as defined in claim 22, wherein said common switching element is in said input stage means (110) .

24. A switch fabric as defined in claim 22, wherein said common switching element is in said at least one intermediate stage means (130).

25. A switch fabric as defined in claim 22, wherein said common switching element is in said output stage means (120).

26. A switch fabric as defined in claim 22, wherein prior to failure of the working link, said switch fabric controller means (105) is operative to establish an internal pathway for directing low priority data traffic through said at least one switching element to the protection link.

27. A switch fabric as defined in claim 23, wherein said switching event causes the low priority data traffic to be dropped.

## Patentansprüche

1. Vermittlungsstruktur-Steuerungseinrichtung (105), die zur Verwendung mit einer Vermittlungsstruktur (199) ausgebildet ist, wobei die Vermittlungsstruktur zum Vermitteln von Datenverkehr entsprechend einer Vielzahl von Verbindungsstrecken dient und Folgendes umfasst:
eine Eingangsstufen-Einrichtung (110), die eine Vielzahl von Schaltelementen einschließt, die externe Eingangs-Ports aufweisen;
eine Ausgangsstufen-Einrichtung (120), die eine Vielzahl von Schaltelementen einschließt, die externe Ausgangs-Ports aufweisen; und
zumindest eine Zwischenstufen-Einrichtung (130), die eine Vielzahl von Schaltelement-Einrichtungen einschließt,
wobei die Vermittlungsstruktur-Steuerungseinrichtung eine Verbindungsstrecken-Datenbank-Einrichtung (190, 192) einschließt, die Informationen über die Vielzahl von Verbindungsstrecken enthält, **dadurch gekennzeichnet, dass**:
die Vermittlungsstruktur-Steuerungseinrichtung betreibbar ist, um die Verbindungsstrecken-Datenbank-Einrichtung zu durchsuchen, um Verbindungsstrecken zu identifizieren, die auf einer ersten Ebene symmetrisch sind, wobei zwei Verbindungsstrecken auf der ersten Ebene symmetrisch sind, wenn: die Anzahl der externen Eingangs-Ports der ersten Verbindungsstrecke gleich der Anzahl von externen Ausgangs-Ports einer zweiten Verbindungsstrecke ist, und die Anzahl der externen Ausgangs-Ports der ersten Verbindungsstrecke gleich der Anzahl von externen Eingangs-Ports der zweiten Verbindungsstrecke ist; und
die Vermittlungsstruktur-Steuerungseinrichtung betreibbar ist, um interne Pfade zwischen der Eingangsstufen-Einrichtung und der Ausgangsstufen-Einrichtung über die zumindest eine Zwischenstufen-Einrichtung herzustellen, wobei zumindest zwei auf der ersten Ebene symmetrische Verbindungsstrecken, die durch die Suche identifiziert werden, unter Verwendung einer gemeinsamen Schaltelement-Einrichtung der genannten zumindest einen Zwischenstufen-Einrichtung realisiert werden.

2. Vermittlungsstruktur (199) zum Vermitteln von Datenverkehr entsprechend einer Vielzahl von Verbindungsstrecken, mit:
einer Eingangsstufen-Einrichtung (110), die eine Vielzahl von Schaltelementen einschließt, die externe Eingangs-Ports aufweisen;
einer Ausgangsstufen-Einrichtung (120), die eine Vielzahl von Schaltelementen mit externen Ausgangs-Ports einschließt;
zumindest einer Zwischenstufen-Einrichtung (130), die eine Vielzahl von Schaltelement-Einrichtungen einschließt; und
einer Vermittlungsstruktur-Steuerungseinrichtung (105), wie sie im Anspruch 1 definiert ist.

3. Vermittlungsstruktur nach Anspruch 2, bei der die Vermittlungsstruktur (199) zur Leitungsvermittlung von Datenverkehr dient.

4. Vermittlungsstruktur nach Anspruch 3, bei der die Vermittlungsstruktur-Steuerungseinrichtung (105) weiterhin betreibbar ist, um die Verbindungsstrecken-Datenbank-Einrichtung zu durchsuchen, um Verbindungsstrecken zu identifizieren, die auf einer zweiten Ebene symmetrisch sind, wobei zwei Verbindungsstrecken auf der zweiten Ebene symmetrisch sind, wenn sie zusätzlich dazu, dass sie auf der ersten Ebene symmetrisch sind, sie ein gemeinsames Schaltelement an der Eingangsstufe gemeinsam nutzen, und um interne Pfade zwischen der Eingangsstufen-Einrichtung und der Ausgangsstufen-Einrichtung über die zumindest eine Zwischenstufen-Einrichtung auszubilden, wobei zumindest zwei auf der zweiten Ebene symmetrische Verbindungsstrecken, die durch die Suche identifiziert wurden, über eine gemeinsame Schaltelement-Einrichtung der zumindest einen Zwischenstufen-Einrichtung realisiert werden.

5. Vermittlungsstruktur nach Anspruch 4, bei der die Vermittlungsstruktur-Steuerungseinrichtung (105) weiterhin betreibbar ist, um die Verbindungsstrecken-Datenbank-Einrichtung zu durchsuchen, um Verbindungsstrecken zu identifizieren, die auf einer dritten Ebene symmetrisch sind, wobei zwei Verbindungsstrecken auf der dritten Ebene symmetrisch sind, wenn sie zusätzlich dazu, dass sie auf der zweiten Ebene symmetrisch sind, sie ein gemeinsames Schaltelement an der Ausgangsstufe gemeinsam nutzen, und um interne Pfade zwischen der Eingangsstufen-Einrichtung und der Ausgangsstufen-Einrichtung über die zumindest eine Zwischenstufen-Einrichtung herzustellen, wobei zumindest zwei auf der dritten Ebene symmetrische Verbindungsstrecken, die durch die Suche identifiziert werden, über eine gemeinsame Schaltelement-Einrichtung der zumindest einen Zwischenstufen-Einrichtung realisiert werden.

6. Vermittlungsstruktur nach Anspruch 5, bei der die Vermittlungsstruktur-Steuerungseinrichtung (105) betreibbar ist, um die Verbindungsstrecken-Datenbank-Einrichtung zu durchsuchen, um alle Paare von Verbindungsstrecken, die auf der dritten Ebene symmetrisch sind, und die in der Verbindungsstrecken-Datenbank-Einrichtung vorliegen, zu identifizieren.

7. Vermittlungsstruktur nach Anspruch 6, bei der jedes Paar von auf der dritten Ebene symmetrischen Verbindungsstrecken über eine jeweilige gemeinsame Schaltelement-Einrichtung der zumindest einen Zwischenstufen-Einrichtung (130) realisiert ist.

8. Vermittlungsstruktur nach Anspruch 5, bei der die Verbindungsstrecken-Datenbank-Einrichtung (190, 192) auf der dritten Ebene symmetrische Verbindungsstrecken einschließt, die Punkt-zu-Punkt-Verbindungsstrecken sind.

9. Vermittlungsstruktur nach Anspruch 5, bei der die Verbindungsstrecken-Datenbank-Einrichtung (190, 192) auf der dritten Ebene symmetrische Verbindungsstrecken einschließt, die Punkt-zu-Mehrpunkt-Verbindungsstrecken sind.

10. Vermittlungsstruktur nach Anspruch 5, die eine einzige Zwischenstufen-Einrichtung (130) einschließt.

11. Vermittlungsstruktur nach Anspruch 10, bei der die Verbindungsstrecken in der Verbindungsstrecken-Datenbank-Einrichtung (190, 192) durch eine Komplexität **gekennzeichnet** sind, wobei die Vermittlungsstruktur-Steuerungseinrichtung (105) betreibbar ist, um Wertigkeiten zu Verbindungsstrecken in der Verbindungsstrecken-Datenbank-Einrichtung gemäß der Komplexität der Verbindungsstrecken zuzuordnen, die Verbindungsstrecken-Datenbank-Einrichtung entsprechend den zugeordneten Wertigkeiten in absteigender Reihenfolge der Komplexität neu anzuordnen, und die neu angeordnete Verbindungsstrecken-Datenbank-Einrichtung beginnend mit der Verbindungsstrecke mit der höchsten Wertigkeit zu verarbeiten, um Schaltelement-Einrichtungen der zumindest einen Zwischenstufen-Einrichtung (130) zuzuordnen, wenn interne Pfade für die Verbindungsstrecken in der neu angeordneten Verbindungsstrecken-Datenbank-Einrichtung berechnet werden.

12. Vermittlungsstruktur nach Anspruch 5, bei der die Vermittlungsstruktur-Steuerungseinrichtung (105) betreibbar ist, um die Vielzahl von Verbindungsstrecken in zumindest zwei Gruppen aufzuteilen, wobei die zumindest zwei auf der dritten Ebene symmetrische Verbindungsstrecken, die durch die Suche identifiziert wurden, in unterschiedlichen Grupen angeordnet werden.

13. Vermittlungsstruktur nach Anspruch 12, bei der die Vermittlungsstruktur (199) betreibbar ist, um interne Pfade für Verbindungsstrecken in einer der Gruppen auszubilden, und nachfolgend interne Pfade für Verbindungsstrecken in der anderen der Gruppe auszubilden.

14. Verfahren zur Vermittlung von Datenverkehr entsprechend einer Vielzahl von Verbindungsstrecken durch eine Vermittlungsstruktur (199), wobei die Vermittlungsstruktur Folgendes aufweist:
eine Eingangsstufe (110), die eine Vielzahl von Schaltelementen mit externen Eingangs-Ports einschließt;
eine Ausgangsstufe (120), die eine Vielzahl von Schaltelementen mit externen Ausgangs-Ports einschließt;
zumindest eine Zwischenstufe (130), die eine Vielzahl von Schaltelementen einschließt; und
eine Verbindungsstrecken-Datenbank (190, 192), die Information über die Vielzahl von Verbindungsstrecken einschließt, gemäß der Datenverkehr durch die Vermittlungsstruktur zu vermitteln ist,
wobei das Verfahren **dadurch gekennzeichnet ist, dass** es folgende Schritte umfasst:
Durchsuchen der Verbindungsstrecken-Datenbank zur Identifikation von Verbindungsstrecken, die auf einer ersten Ebene symmetrisch sind, wobei zwei Verbindungsstrecken auf der ersten Ebene symmetrisch sind, wenn: die Anzahl der externen Eingangs-Ports einer ersten Verbindungsstrecke gleich der Anzahl von externen Ausgangs-Ports einer zweiten Verbindungsstrecke ist, und die Anzahl der externen Ausgangs-Ports der ersten Verbindungsstrecke gleich der Anzahl von externen Eingangs-Ports der zweiten Verbindungsstrecke ist; und
Ausbilden interner Pfade zwischen der Eingangsstufe und der Ausgangsstufe durch die zumindest eine Zwischenstufe (298) hindurch, wobei zumindest zwei auf der ersten Ebene symmetrische Verbindungsstrecken, die durch die Suche identifiziert wurden, über ein gemeinsames Schaltelement der zumindest einen Zwischenstufe realisiert werden.

15. Verfahren nach Anspruch 14, bei dem der Datenverkehr leitungsvermittelter Datenverkehr ist.

16. Verfahren nach Anspruch 15, das das Durchsuchen der Verbindungsstrecken-Datenbank (190, 192) zur Identifikation aller Paare von auf der ersten Ebene symmetrische Verbindungsstrecken einschließt, die in der Verbindungsstrecken-Datenbank vorhanden sind.

17. Verfahren nach Anspruch 15, bei dem das Verfahren das Durchsuchen der Verbindungsstrecken-Datenbank (190, 192) zur Identifikation von Paaren von symmetrischen Verbindungsstrecken auf einer zweiten Ebene, wobei zwei Verbindungsstrecken auf der zweiten Ebene symmetrisch sind, wenn sie zusätzlich dazu, dass sie auf der ersten Ebene symmetrisch sind, ein gemeinsames Schaltelement an der Eingangsstufe gemeinsam nutzen, und das Ausbilden interner Pfade zwischen der Eingangsstufe (110) und der Ausgangsstufe (120) über die zumindest eine Zwischenstufe (130) einschließt, wobei zumindest zwei auf der zweiten Ebene symmetrische Verbindungsstrecken, die durch die Suche identifiziert wurden, über ein gemeinsames Schaltelement der zumindest einen Zwischenstufe realisiert werden.

18. Verfahren nach Anspruch 17, bei dem das Verfahren das Durchsuchen der Verbindungsstrecken-Datenbank (190, 192) zur Identifikation von Paaren von symmetrischen Verbindungsstrecken auf einer dritten Ebene, wobei zwei Verbindungsstrecken auf der dritten Ebene symmetrisch sind, wenn sie zusätzlich dazu, dass sie auf der zweiten Ebene symmetrisch sind, ein gemeinsames Schaltelement an der Ausgangsstufe gemeinsam nutzen, und das Ausbilden interner Pfade zwischen der Eingangsstufe (110) und der Ausgangsstufe (120) über die zumindest eine Zwischenstufe (130) einschließt, wobei zumindest zwei auf der dritten Ebene symmetrische Verbindungsstrecken, die durch die Suche identifiziert wurden, über ein gemeinsames Schaltelement der zumindest einen Zwischenstufe realisiert werden.

19. Verfahren nach Anspruch 15, bei dem die Verbindungsstrecken in der Verbindungsstrecken-Datenbank (190, 192) durch eine Komplexität **gekennzeichnet** sind, wobei das Verfahren die Zuordnung von Wertigkeiten zu Verbindungsstrecken in der Verbindungsstrecken-Datenbank entsprechend der Komplexität der Verbindungsstrecken, die Neuanordnung der Verbindungsstrecken-Datenbank entsprechend der zugeordneten Wertigkeiten in absteigender Reihenfolge der Komplexität und die Verarbeitung der neu geordneten Verbindungsstrecken-Datenbank beginnend mit der Verbindungsstrecke einschließt, die die höchste Wertigkeit aufweist, um Schaltelemente der zumindest einen Zwischenstufe (130) zuzuordnen, wenn interne Pfade für die Verbindungsstrecken in der neu geordneten Verbindungsstrecken-Datenbank berechnet werden.

20. Computerprogramm, das Computerprogramm-Codeeinrichtungen umfasst, die zur Durchführung aller der Schritte nach Anspruch 14 ausgebildet sind, wenn das Programm auf einem Computer abläuft.

21. Computerprogramm nach Anspruch 20, das auf einem computerlesbaren Medium verwirklicht ist.

22. Vermittlungsstruktur nach Anspruch 2, bei der:
die Vermittlungsstruktur-Steuerungseinrichtung (105) betreibbar ist, um einen internen Pfad für eine Arbeits-Verbindungsstrecke durch die Eingangsstufen-Einrichtung (110), die Ausgangsstufen-Einrichtung (120) und durch die zumindest eine Zwischenstufen-Einrichtung (130) hindurch auszubilden; und
die Vermittlungsstruktur-Steuerungseinrichtung (105) betreibbar ist, um einen internen Pfad für eine Schutzumschalt-Verbindungsstrecke, die die Arbeits-Verbindungsstrecke schützt, durch die Eingangsstufen-Einrichtung, die Ausgangsstufen-Einrichtung und die zumindest eine Zwischenstufen-Einrichtung hindurch auszubilden, wobei die Arbeits-Verbindungsstrecke und die Schutzumschalt-Verbindungsstrecke durch zumindest ein gemeinsames Schaltelement der Eingangsstufen-Einrichtung, der Ausgangsstufen-Einrichtung und der zumindest einen Zwischenstufen-Einrichtung hindurch ausgebildet werden; und
im Fall eines Ausfalls der Arbeits-Verbindungsstrecke die Vermittlungsstruktur-Steuerungseinrichtung (105) betreibbar ist, um ein Vermittlungsereignis an dem zumindest einen gemeinsamen Schaltelement auszuführen, um Datenverkehr auf der Arbeits-Verbindungsstrecke auf die Schutzumschalt-Verbindungsstrecke zu lenken.

23. Vermittlungsstruktur nach Anspruch 22, bei der sich das gemeinsame Schaltelement in der Eingangsstufen-Einrichtung (110) befindet.

24. Vermittlungsstruktur nach Anspruch 22, bei der sich das gemeinsame Schaltelement in der zumindest einen Zwischenstufen-Einrichtung (130) befindet.

25. Vermittlungsstruktur nach Anspruch 22, bei der sich das gemeinsame Schaltelement in der Ausgangsstufen-Einrichtung (120) befindet.

26. Vermittlungsstruktur nach Anspruch 22, bei der vor dem Ausfall der Arbeits-Verbindungsstrecke die Vermittlungsstruktur-Steuerungseinrichtung (105) betreibbar ist, um einen internen Pfad zum Lenken von eine niedrige Priorität aufweisenden Datenverkehr durch das zumindest eine Schaltelement an die Schutzumschalt-Verbindungsstrecke auszubilden.

27. Vermittlungsstruktur nach Anspruch 23, bei der das Vermittlungsereignis bewirkt, dass der eine niedrige Priorität aufweisende Datenverkehr verworfen wird.

## Revendications

1. Une unité de commande de structure de commutateur (105) adaptée pour être utilisé avec une structure de commutateur (199), la structure de commutateur étant destinée à commuter du trafic de données conformément à une multiplicité de liaisons et comprenant :
un étage d'entrée (110) incluant une multiplicité d'éléments de commutation ayant des ports d'entrée externes;
un étage de sortie (120) incluant une multiplicité d'éléments de commutation ayant des ports de sortie externes; et
au moins un étage intermédiaire (130) incluant une multiplicité d'éléments de commutation,
cette unité de commande de structure de commutateur incluant une base de données de liaisons (190, 192) contenant de l'information concernant la multiplicité de liaisons;
**caractérisée en ce que**
l'unité de commande de structure de commutateur fonctionne de façon à effectuer une recherche dans la base de données de liaisons pour identifier des liaisons qui sont symétriques à un premier niveau, deux liaisons étant symétriques au premier niveau si : le nombre de ports d'entrée externes d'une première liaison est égal au nombre de ports de sortie externes d'une deuxième liaison, et le nombre de ports de sortie externes de la première liaison est égal au nombre de ports d'entrée externes de la deuxième liaison; et
l'unité de commande de structure de commutateur fonctionne de façon à établir des itinéraires internes entre l'étage d'entrée et l'étage de sortie à travers l'au moins un étage intermédiaire, au moins deux liaisons symétriques au premier niveau identifiées par la recherche étant réalisées en utilisant un élément de commutation commun de l'au moins un étage intermédiaire.

2. Une structure de commutateur (199) pour commuter du trafic de données conformément à une multiplicité de liaisons, comprenant :
un étage d'entrée (110) incluant une multiplicité d'éléments de commutation ayant des ports d'entrée externes;
un étage de sortie (120) incluant une multiplicité d'éléments de commutation ayant des ports de sortie externes;
au moins un étage intermédiaire (130) incluant une multiplicité d'éléments de commutation; et
une unité de commande de structure de commutateur (105) définie dans la revendication 1.

3. Une structure de commutateur définie dans la revendication 2, dans laquelle la structure de commutateur (199) est destinée à du trafic de données en commutation de circuits.

4. Une structure de commutateur définie dans la revendication 3, dans laquelle l'unité de commande de structure de commutateur (105) fonctionne en outre de façon à effectuer une recherche dans la base de données de liaisons pour identifier des liaisons qui sont symétriques à un deuxième niveau, deux liaisons étant symétriques au deuxième niveau si, en plus d'être symétriques au premier niveau, elles partagent un élément de commutation commun à l'étage d'entrée, et établir des itinéraires internes entre l'étage d'entrée et l'étage de sortie à travers l'au moins un étage intermédiaire, et dans laquelle au moins deux liaisons symétriques au deuxième niveau identifiées par la recherche sont établies sur un élément de commutation commun de l'au moins un étage intermédiaire.

5. Une structure de commutateur définie dans la revendication 4, dans laquelle l'unité de commande de structure de commutateur (105) fonctionne en outre de façon à effectuer une recherche dans la base de données de liaisons pour identifier des liaisons qui sont symétriques à un troisième niveau, deux liaisons étant symétriques au troisième niveau si, en plus d'être symétriques au deuxième niveau, elles partagent un élément de commutation commun à l'étage de sortie, et établir des itinéraires internes entre l'étage d'entrée et l'étage de sortie à travers l'au moins un étage intermédiaire, et dans laquelle au moins deux liaisons symétriques au troisième niveau identifiées par la recherche sont établies sur un élément de commutation commun de l'au moins un étage intermédiaire.

6. Une structure de commutateur définie dans la revendication 5, dans laquelle l'unité de commande de structure de commutateur (105) fonctionne de façon à effectuer une recherche dans la base de données de liaisons pour identifier toutes les paires de liaisons symétriques au troisième niveau présentes dans la base de données de liaisons.

7. Une structure de commutateur définie dans la revendication 6, dans laquelle chaque paire de liaisons symétriques au troisième niveau est établie sur un élément de commutation commun respectif de l'au moins un étage intermédiaire (130).

8. Une structure de commutateur définie dans la revendication 5, dans laquelle la base de données de liaisons (190, 192) comprend des liaisons symétriques au troisième niveau qui sont en monodiffusion.

9. Une structure de commutateur définie dans la revendication 5, dans laquelle la base de données de liaisons (190, 192) comprend des liaisons symétriques au troisième niveau qui sont en multidiffusion.

10. Une structure de commutateur définie dans la revendication 5, incluant un seul étage intermédiaire (130).

11. Une structure de commutateur définie dans la revendication 10, dans laquelle les liaisons dans la base de données de liaisons (190, 192) sont **caractérisées par** une complexité, l'unité de commande de structure de commutateur (105) fonctionnant de façon à assigner des poids à des liaisons dans la base de données de liaisons conformément à la complexité des liaisons, réordonner la base de données de liaisons, conformément aux poids assignés, en ordre décroissant de complexité, et traiter la base de données de liaisons réordonnée, en partant de la liaison ayant le poids le plus élevé, pour assigner des éléments de commutation de l'au moins un étage intermédiaire (130) au moment du calcul, d'itinéraires internes pour les liaisons dans la base de données de liaisons réordonnée.

12. Une structure de commutateur définie dans la revendication 5, dans laquelle l'unité de commande de structure de commutateur (105) fonctionne de façon à séparer la multiplicité de liaisons en au moins deux groupes, dans laquelle les au moins deux liaisons symétriques au troisième niveau identifiées par la recherche sont placées dans des groupes différents.

13. Une structure de commutateur définie dans la revendication 12, dans laquelle la structure de commutateur (199) fonctionne de façon à établir des itinéraires internes pour des liaisons dans l'un des groupes, et ensuite à établir des itinéraires internes pour des liaisons dans l'autre des groupes.

14. Un procédé pour commuter du trafic de données conformément à une multiplicité de liaisons à travers une structure de commutateur (199), la structure de commutateur ayant :
un étage d'entrée (110) incluant une multiplicité d'éléments de commutation ayant des ports d'entrée externes;
un étage de sortie (120) incluant une multiplicité d'éléments de commutation ayant des ports de sortie externes; et
au moins un étage intermédiaire (130) incluant une multiplicité d'éléments de commutation; et
une base de données de liaisons (190, 192) contenant de l'information concernant la multiplicité de liaisons conformément à laquelle du trafic de données doit être commuté par la structure de commutateur,
ce procédé étant **caractérisé en ce qu'**il comprend les étapes consistant à :
effectuer une recherche dans la base de données de liaisons pour identifier des liaisons qui sont symétriques à un premier niveau, deux liaisons étant symétriques au premier niveau si : le nombre de ports d'entrée externes d'une première liaison est égal au nombre de ports de sortie externes d'une deuxième liaison, et le nombre de ports de sortie externes de la première liaison est égal au nombre de ports d'entrée externes de la deuxième liaison; et
établir des itinéraires internes entre l'étage d'entrée et l'étage de sortie à travers l'au moins un étage intermédiaire (298), au moins deux liaisons symétriques au premier niveau identifiées par la recherche étant établies sur un élément de commutation commun de l'au moins un étage intermédiaire.

15. Un procédé défini dans la revendication 14, dans lequel le trafic de données est du trafic de données en commutation de circuits.

16. Un procédé défini dans la revendication 15, incluant l'accomplissement d'une recherche dans la base de données de liaisons (190, 192) pour identifier toutes les paires de liaisons symétriques au premier niveau présentes dans la base de données de liaisons.

17. Un procédé défini dans la revendication 15, dans lequel le procédé comprend l'accomplissement d'une recherche dans la base de données de liaisons (190, 192) pour identifier des paires de liaisons symétriques à un deuxième niveau, deux liaisons étant symétriques au deuxième niveau si en plus d'être symétriques au premier niveau, elles partagent un élément de commutation commun à l'étage d'entrée, et l'établissement d'itinéraires internes entre l'étage d'entrée (110) et l'étage de sortie (120) à travers l'au moins un étage intermédiaire (130), au moins deux liaisons symétriques au deuxième niveau identifiées par la recherche étant établies sur un élément de commutation commun de l'au moins un étage intermédiaire.

18. Un procédé défini dans la revendication 17, dans lequel le procédé comprend l'accomplissement d'une recherche dans la base de données de liaisons (190, 192) pour identifier des paires de liaisons symétriques à un troisième niveau, deux liaisons étant symétriques au troisième niveau si, en plus d'être symétriques au deuxième niveau, elles partagent un élément de commutation commun à l'étage de sortie, et l'établissement d'itinéraires internes entre l'étage d'entrée (110) et l'étage de sortie (120) à travers l'au moins un étage intermédiaire (130), au moins deux liaisons symétriques au troisième niveau identifiées par la recherche étant établies sur un élément de commutation commun de l'au moins un étage intermédiaire.

19. Un procédé dans la revendication 15, dans lequel les liaisons dans la base de données de liaisons (190, 192) sont **caractérisées par** une complexité, le procédé incluant l'assignation de poids à des liaisons dans la base de données de liaisons conformément à la complexité des liaisons, la remise en ordre de la base de données de liaisons conformément aux poids assignés, en ordre décroissant de complexité, et le traitement de la base de données de liaisons réordonnée, en partant de la liaison ayant le poids le plus élevé, pour assigner des éléments de commutation de l'au moins un étage intermédiaire (130) au moment du calcul d'itinéraires internes pour les liaisons dans la base de données de liaisons réordonnée.

20. Un programme informatique comprenant une structure de code de programme informatique adaptée pour accomplir toutes les étapes de la revendication 14 lorsque ce programme est exécuté sur un ordinateur.

21. Un programme défini dans la revendication 20, incorporé sur un support lisible par ordinateur.

22. Une structure de commutateur définie dans la revendication 2, dans laquelle :
l'unité de commande de structure de commutateur (105) fonctionne de façon à établir un itinéraire interne pour une liaison de travail à travers l'étage d'entrée (110), l'étage de sortie (120) et à travers l'au moins un étage intermédiaire (130); et
l'unité de commande de structure de commutateur (105) fonctionne de façon à établir un itinéraire interne pour une liaison de protection protégeant la liaison de travail, à travers l'étage d'entrée, l'étage de sortie et l'au moins un étage intermédiaire, la liaison de travail et la liaison de protection étant établies à travers au moins un élément de commutation commun de l'étage d'entrée, de l'étage de sortie et l'au moins un étage intermédiaire; et
dans le cas d'une défaillance de la liaison de travail l'unité de commande de structure de commutateur (105) fonctionne de façon à exécuter un événement de commutation à l'au moins un élément de commutation commun, pour diriger vers la liaison de protection le trafic de données présent sur la liaison de travail.

23. Une structure de commutateur définie dans la revendication 22, dans laquelle l'élément de commutation commun est dans l'étage d'entrée (110).

24. Une structure de commutateur définie dans la revendication 22, dans laquelle l'élément de commutation commun est dans l'au moins un étage intermédiaire (130).

25. Une structure de commutateur définie dans la revendication 22, dans laquelle l'élément de commutation commun est dans l'étage de sortie (120).

26. Une structure de commutateur définie dans la revendication 22, dans laquelle avant la défaillance de la liaison de travail, l'unité de commande de structure de commutateur (105) fonctionne de façon à établir un itinéraire interne pour diriger vers la liaison de protection du trafic de données de faible priorité à travers l'au moins un élément de commutation.

27. Une structure de commutateur définie dans la revendication 23, dans laquelle l'événement de commutation occasionne l'abandon du trafic de données de faible priorité.
